# FASCICULE DE BREVET EUROPEEN

(11) **EP 3 885 190 B1**
(45) Date de publication et mention de la délivrance du brevet: **06.05.2026**
(21) Numéro de dépôt: 21163912.5
(22) Date de dépôt: 22.03.2021
(51) Int. Cl.: B60P 1/00, E01C 19/20

(54) **BENNE DEMI-RONDE À FOND POUSSOIR À DÉCHARGE PAR UNE OUVERTURE PRATIQUÉE DANS UN CADRE D'APPUI DE LA PAROI ARRIÈRE**
HALBRUNDER KÜBEL MIT SCHUBBODEN, DER DURCH EINE ÖFFNUNG IN EINEM STÜTZRAHMEN DER RÜCKWAND ENTLEERT WIRD
HALF-ROUND SKIP WITH PUSH BUTTON BASE FOR DISCHARGE THROUGH AN OPENING MADE IN A FRAME FOR SUPPORTING THE REAR WALL

(30) Priorité: 23.03.2020 FR 2002821
(43) Date de publication de la demande: 29.09.2021
(73) Titulaire: CI 85 (Carrosserie Industrielle et Services), 85140 Essarts en Bocage (FR)
(72) Inventeur: ARNAUD, Bernard, 85140 ESSARTS EN BOCAGE (FR)
(74) Mandataire: Cabinet Chaillot

(56) Documents cités:
- FR-A- 1 546 464
- FR-A1- 2 913 644
- FR-A1- 3 059 281
- US-A- 2 751 096
- US-A- 5 823 630

## Description

La présente invention porte sur une benne demi-ronde à fond poussoir présentant une ouverture de décharge de matière ménagée dans un cadre d'appui de sa paroi arrière et pouvant être fermée par une plaque d'obturation.

Les bennes demi-rondes à fond poussoir sont aujourd'hui utilisées pour transporter différents types de matériaux, tels que par exemple des enrobés que l'on transporte à chaud dans la benne et que l'on applique également à chaud sur la chaussée à recouvrir.

Les bennes à fond poussoir permettent de faire sortir le matériau contenu dans la benne par la porte arrière de la benne sans avoir à lever ladite benne, ce qui permet d'améliorer la sécurité d'utilisation de celle-ci. Dans ce cas, la porte arrière est ouverte en grand pour pouvoir faire sortir le matériau, le fond poussoir ou bouclier pousse le matériau et provoque donc sa sortie de la benne.

Aujourd'hui, les demandes en sécurité sont encore plus fortes pour que les opérateurs travaillant à proximité de la benne puissent travailler en toute sécurité. En effet, pour de meilleures conditions de sécurité, il est souhaitable que les travailleurs travaillant à l'arrière de la benne puissent le faire avec la porte de la benne fermée en permanence. En effet, ceci permet d'éviter qu'un opérateur ne soit enseveli par les matériaux contenus dans la benne dans le cas d'une sortie trop rapide des matériaux.

De plus, dans le cas particulier des enrobés à chaud, l'ouverture de la benne refroidit les enrobés présents dans la benne, ce qui n'est pas souhaitable, car les enrobés se refroidissant ont plus de difficultés à sortir de la benne.

Le présent demandeur a déjà proposé une benne demi-ronde à fond poussoir dotée d'une ouverture sous la benne afin de pouvoir utiliser la benne avec la porte fermée.

Dans ce cas, un opérateur souhaitant récupérer des matériaux doit par exemple placer une brouette sous la benne pour pouvoir récupérer le matériau sortant de la benne par cette ouverture. Ceci peut parfois être peu commode pour l'opérateur qui doit s'approcher très près de la benne pour pouvoir placer sa brouette, et dans le cas où la benne contient des enrobés à chaud, l'opérateur ressent fortement la chaleur des enrobés présents à l'intérieur de la benne.

Il serait souhaitable de pouvoir disposer d'une benne permettant de travailler à l'arrière d'une benne sans avoir à en ouvrir la porte arrière et en permettant un accès très aisé au matériau sortant de la benne pour un opérateur tout en ne travaillant pas à proximité directe de la porte arrière. De plus, dans le cas où la benne contient un enrobé, il serait pratique de pouvoir travailler avec le moins de perte de chaleur à l'intérieur de la benne.

FR 2 913 644 A1 décrit une benne à déchargement horizontal qui comprend un bouclier éjecteur mobile en translation de manière à déplacer dans une enceinte un matériau de construction en direction d'une porte relevable située à l'arrière de la benne. Cette benne comporte une goulotte comprenant une première surface d'appui apte à coopérer avec une face arrière de l'enceinte ; une seconde surface d'appui apte à coopérer avec une face intérieure de la porte relevable lorsque ladite porte relevable est agencée dans une position inclinée, et ; une vanne apte à permettre un écoulement du matériau de construction en dehors de l'enceinte.

US 2 751 096 A décrit une benne qui présente une porte de poussée ou d'éjection mobile vers l'arrière formant normalement la fermeture avant de la benne, et une porte arrière articulée et normalement relevée mais pivotant vers le bas à l'extrémité arrière de la benne, qui est conçue pour être abaissée afin de former une goulotte dans laquelle de la matière glisse lorsque la porte d'éjection est poussée vers l'arrière.

Le présent demandeur a donc recherché une solution à ces problèmes afin de pouvoir décharger le matériau d'une benne demi-ronde à fond poussoir sans avoir à ouvrir la porte arrière et en toute commodité pour l'accès au matériau.

La présente invention a pour objet une benne demi-ronde à fond poussoir pour le transport de matière, comportant un corps de benne fermé par une paroi arrière si l'on considère le sens d'avance de ladite benne en place sur un semi-remorque, un cadre d'appui de la paroi arrière étant disposé entre la région arrière de la benne et la paroi arrière, caractérisée par le fait qu'une ouverture de décharge de matière est pratiquée dans le fond dudit cadre dans une position permettant la sortie de matière arrivant au niveau du fond de benne, une plaque d'obturation de ladite ouverture étant montée dans ledit cadre pour passer d'une position d'obturation proprement dite de l'ouverture de décharge à une position d'ouverture pour la sortie de la matière, et par le fait que la plaque d'obturation se prolonge vers l'arrière pour passer sous la paroi arrière de la benne, laquelle comporte, lorsqu'elle descend au-dessous de la paroi supérieure de la plaque d'obturation en position fermée, une échancrure pour le passage de ce prolongement.

Conformément à un mode de réalisation particulier, la plaque d'obturation est montée basculante vers le bas, sous le cadre, autour d'un axe monté le long de la bordure de l'ouverture située à l'opposé de la paroi arrière pour permettre un déversement de matière.

Le basculement vers le bas peut s'effectuer avantageusement jusqu'à une position inclinée de la plaque d'obturation pour permettre un déversement de matière selon un plan incliné de sortie.

Le basculement peut être commandé par au moins un vérin qui est déplaçable horizontalement et dont le corps est fixé à un organe porté par la benne au-dessous de celle-ci et la tige est fixée à la plaque d'obturation au-dessous du plan contenant l'axe de basculement.

La benne peut comporter un seul vérin situé de façon centrale.

La paroi supérieure de la plaque d'obturation en position fermée peut se situer dans le prolongement du fond de benne.

La benne peut comporter des plaques de guidage latérales de la matière sortante, lesquelles sont portées par le cadre.

Les plaques de guidage peuvent présenter une bordure inférieure inclinée, en pente vers le bas et vers l'arrière.

La plaque d'obturation peut présenter au voisinage de sa bordure arrière un moyen de fermeture étanche apte à coopérer avec un moyen de fermeture étanche complémentaire portée par la paroi arrière.

Pour mieux illustrer l'objet de la présente invention, on va en décrire ci-après, à titre indicatif et non limitatif, un mode de réalisation particulier avec référence au dessin annexé.

Sur ce dessin,
[Fig. 1] est une vue de face de l'extérieur d'une paroi arrière de fermeture d'une benne demi-ronde à fond poussoir de la présente invention, l'ouverture de décharge pratiquée dans le fond du cadre d'appui de la porte étant dans sa position fermée ;
[Fig. 2] est une vue de côté de la benne dans la position de la Figure 1 ;
[Fig. 3] est une vue analogue à la Figure 1 montrant l'ouverture de décharge précitée dans sa position dégagée permettant une décharge de matière ; et
[Fig. 4] est une vue de côté de la benne dans la position de la Figure 3.

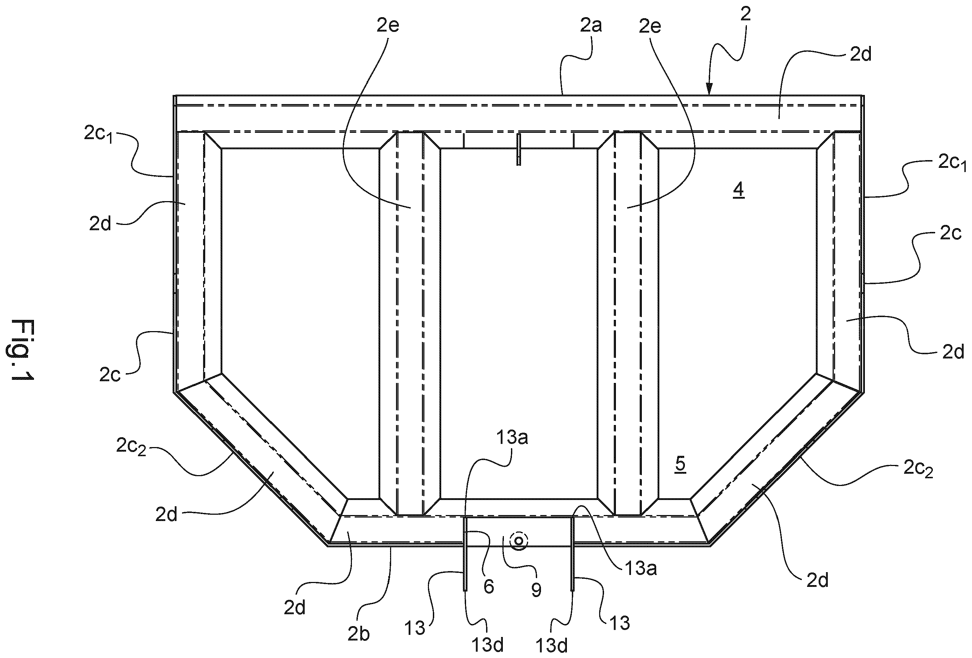

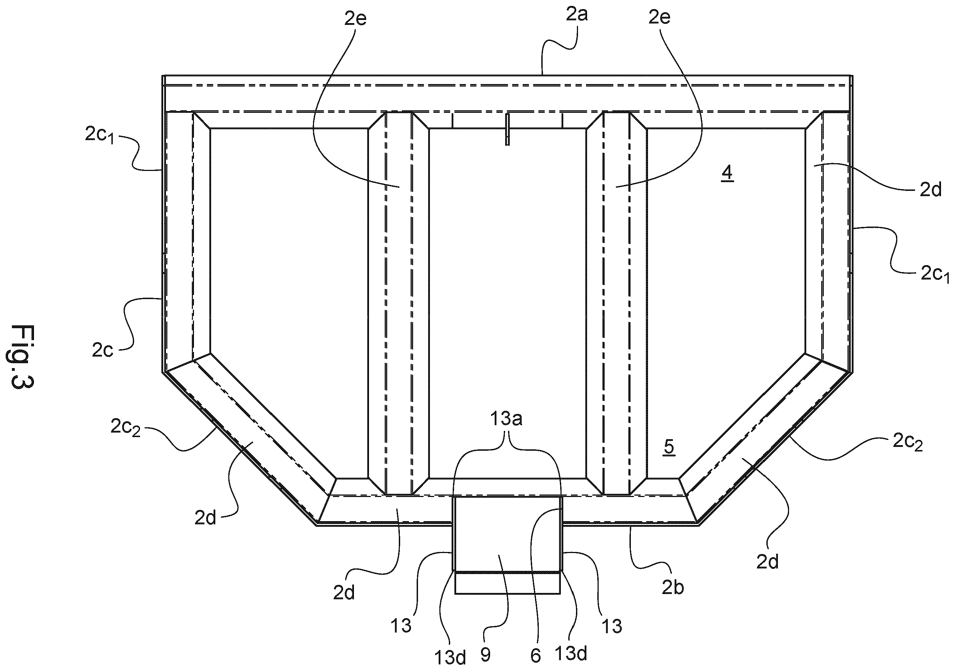

Si l'on se réfère aux Figures 1 à 4, on peut voir que l'on a représenté une benne demi-ronde à fond poussoir 1 pour le transport de matière, la benne 1 étant fermée par une paroi arrière 2 si l'on considère le sens d'avance de ladite benne 1 en place sur un semi-remorque, un cadre 3 d'appui de ladite paroi arrière 2 étant disposé entre la région arrière de la benne 1 et ladite paroi arrière 2.

La paroi arrière 2 a, de façon classique, une forme hexagonale comportant une partie supérieure rectangulaire 4 se prolongeant vers le bas par une partie 5 en forme de trapèze isocèle, ladite paroi arrière 1 étant délimitée par une bordure supérieure horizontale 2a, une bordure inférieure horizontale 2b de moins grande longueur, et deux bordures latérales 2c présentant chacune une partie verticale 2c₁, reliée à la bordure 2a, et une partie inclinée 2c₂ reliée à la bordure 2b.

La paroi arrière 2 présente de façon classique des renforts 2d le long de ses six côtés et deux renforts verticaux 2e disposés de part et d'autre de sa ligne verticale moyenne.

Par ailleurs, une échancrure 6 est pratiquée de façon centrale le long de la bordure inférieure 2b de la paroi arrière 2. Le rôle de cette échancrure 6 est indiqué ci-après.

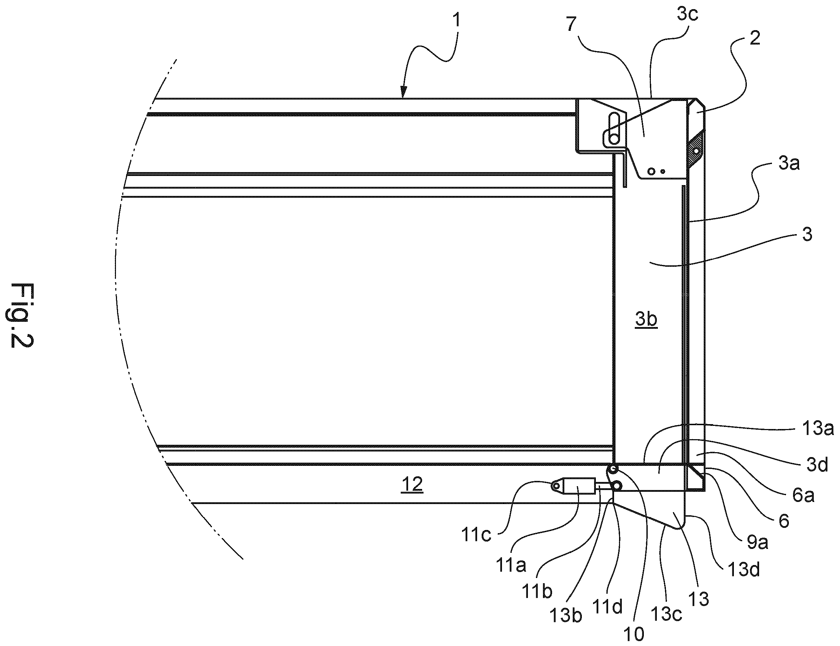

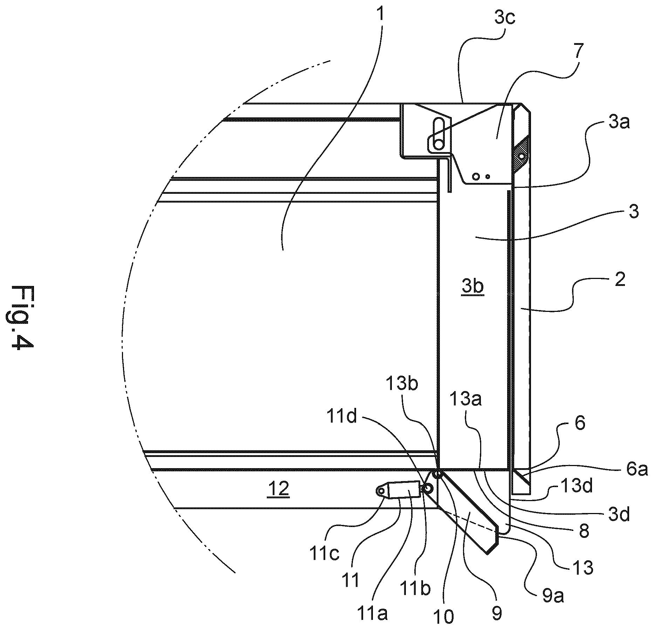

Le cadre 3 d'appui de la paroi arrière 2 - laquelle forme une porte arrière dans l'exemple représenté - peut être observé sur les Figures 2 et 4. Il se présente sous la forme d'un caisson ayant une face 3a appliquée contre la face interne de la paroi arrière 2, à laquelle se raccordent deux faces latérales en regard 3b, une face supérieure 3c et un fond 3d.

La face supérieure 3c porte le moyen de fermeture 7 de la porte formée par la paroi arrière 2, lequel ne sera pas décrit plus en détail dans ce qui suit.

Le fond 3d comporte, dans sa partie centrale, une ouverture 8 pour la décharge de matière. Cette ouverture 8, qui s'étend sur toute la largeur du fond 3d, est apte à être fermée par une plaque d'obturation 9, laquelle est montée basculante vers le bas sous le fond 3d. A cet effet, la plaque 9 est montée basculante autour d'un axe 10 qui est monté le long de la bordure de l'ouverture 8 située à l'opposé de la paroi arrière 2 et qui se situe au voisinage de la surface supérieure de la plaque 9.

Dans l'exemple représenté, la plaque 9 présente une étendue lui permettant de fermer l'ouverture 8 lorsque celle-ci n'est pas en position de décharge, avec un prolongement de celle-ci sous la paroi arrière 2. En position fermée de l'ouverture 8, ce prolongement sous la paroi arrière 2 vient se placer dans l'échancrure 6 décrite plus haut.

La plaque d'obturation 9 est montée basculante sous l'action d'un vérin horizontal 11 comportant un corps de vérin 11a et une tige de vérin 11b.

Le corps de vérin 11a est fixé, à son extrémité opposée à la tige 11b, à un axe 11c réunissant deux longerons 12 situés sous la benne 1 pour en assurer le raidissement, l'un de ces deux longerons 12 étant vu sur les Figures 2 et 4.

La tige de vérin 11b est, à son extrémité opposée au corps de vérin 11a, fixée en 11d à la bordure inférieure de la plaque 9 dans la partie centrale de celle-ci.

L'hydraulique de commande du vérin 11 n'a pas été représentée.

Le fonctionnement du dispositif d'ouverture/obturation de l'ouverture 8 va maintenant être décrit.

Si l'on se réfère à la Figure 2, on peut voir que cette ouverture 8 est fermée par la plaque 9, la tige 11b du vérin 11 étant en position totalement sortie.

Lorsque l'on souhaite distribuer de la matière, on commande le basculement vers le bas si l'on regarde la Figure 2 de la plaque 9, basculement provoqué par un déplacement vers la gauche si l'on regarde cette Figure 2 jusqu'à ce que la tige 11b du vérin 11 se situe en position totalement rentrée (Figure 4). Dans cette position, la matière descend le long de la plaque 9 à l'état incliné, le guidage de la matière étant facilité par deux joues de guidage latéral 13 portées par le cadre 3, présentant chacune une bordure horizontale supérieure 13a le long du bord transversal correspondant de l'ouverture 8, une bordure verticale arrière 13b au droit de l'extrémité arrière correspondante de l'ouverture 8, une bordure inférieure 13c inclinée vers l'arrière et une bordure verticale avant 13d au droit de l'extrémité avant correspondante de l'ouverture 8.

Dans un mode de réalisation particulier, tel que montré sur les Figures 2 et 4, la paroi arrière 2 présente, le long de la bordure supérieure de l'échancrure 6, une partie 6a en saillie vers le bas apte à recevoir une partie chanfreinée correspondante 9a de la plaque 9 en position de fermeture de l'ouverture 8 pour le déchargement de matière.

## Revendications

1. - Benne demi-ronde (1) à fond poussoir pour le transport de matière, comportant un corps de benne (1) fermé par une paroi arrière (2) si l'on considère le sens d'avance de ladite benne (1) en place sur un semi-remorque, un cadre (3) d'appui de la paroi arrière (2) étant disposé entre la région arrière de la benne (1) et la paroi arrière (2),
dans laquelle une ouverture (8) de décharge de matière est pratiquée dans le fond dudit cadre (3) dans une position permettant la sortie de matière arrivant au niveau du fond de benne (1), une plaque d'obturation (9) de ladite ouverture (8) étant montée dans ledit cadre (3) pour passer d'une position d'obturation proprement dite de l'ouverture (8) de décharge à une position d'ouverture pour la sortie de la matière, et **caractérisée**
**par le fait que** la plaque d'obturation (9) se prolonge vers l'arrière pour passer sous la paroi arrière (2) de la benne (1), laquelle comporte, lorsqu'elle descend au-dessous de la paroi supérieure de la plaque d'obturation (9) en position fermée, une échancrure (6) pour le passage de ce prolongement.

2. - Benne (1) selon la revendication 1, **caractérisée par le fait que** la plaque d'obturation (9) est montée basculante vers le bas, sous le cadre (3), autour d'un axe (10) monté le long de la bordure de l'ouverture (8) située à l'opposé de la paroi arrière (2) pour permettre un déversement de matière.

3. - Benne (1) selon la revendication 2, **caractérisée par le fait que** le basculement vers le bas s'effectue jusqu'à une position inclinée de la plaque d'obturation (9) pour permettre un déversement de matière selon un plan incliné de sortie.

4. - Benne (1) selon l'une des revendications 2 et 3, **caractérisée par le fait que** le basculement est commandé par au moins un vérin (11) qui est déplaçable horizontalement et dont le corps (11a) est fixé à un organe (12) porté par la benne (1) au-dessous de celle-ci et la tige (11b) est fixée à la plaque d'obturation (9) au-dessous du plan contenant l'axe (10) de basculement.

5. - Benne (1) selon la revendication 4, **caractérisée par le fait qu'**elle comporte un seul vérin (11) situé de façon centrale.

6. - Benne (1) selon l'une des revendications 1 à 5, **caractérisée par le fait que** la paroi supérieure de la plaque d'obturation (9) en position fermée se situe dans le prolongement du fond de benne (1).

7. - Benne (1) selon l'une des revendications 1 à 6, **caractérisée par le fait qu'**elle comporte des plaques de guidage (13) latérales de la matière sortante, lesquelles sont portées par le cadre (3).

8. - Benne selon la revendication 7, **caractérisée par le fait que** les plaques de guidage (13) présentent une bordure inférieure inclinée (13c), en pente vers le bas et vers l'arrière.

9. - Benne (1) selon l'une des revendications 1 à 8, **caractérisée par le fait que** la plaque d'obturation (9) présente au voisinage de sa bordure arrière un moyen de fermeture (9a) étanche apte à coopérer avec un moyen de fermeture (6a) étanche complémentaire portée par la paroi arrière (2).

## Patentansprüche

1. - Halbrunde Mulde (1) mit Schubboden zum Transport von Material, bestehend aus einem Muldenkörper (1), der in Transportrichtung der Mulde (1) auf einem Sattelauflieger durch eine Rückwand (2) verschlossen ist, wobei ein Stützrahmen (3) für die Rückwand (2) zwischen dem hinteren Bereich der Mulde (1) und der Rückwand (2) angeordnet ist,
wobei im Boden des Rahmens (3) eine Öffnung (8) zum Entladen von Material in einer Position vorgesehen ist, die das Austreten von Material ermöglicht, das auf Höhe des Bodens der Mulde (1) ankommt, wobei eine Verschlussplatte (9) für die genannte Öffnung (8) in dem genannten Rahmen (3) angebracht ist, um von einer eigentlichen Verschlussposition der Entleerungsöffnung (8) in eine Öffnungsposition für den Austritt des Materials zu gelangen, und **dadurch gekennzeichnet, dass** sich die Verschlussplatte (9) nach hinten erstreckt, um unter die Rückwand (2) der Mulde (1) zu gelangen, die, wenn sie unter die obere Wand der Verschlussplatte (9) in geschlossener Position absinkt, eine Aussparung (6) für den Durchgang dieser Verlängerung aufweist.

2. - Mulde (1) nach Anspruch 1, **dadurch gekennzeichnet, dass** die Verschlussplatte (9) unterhalb des Rahmens (3) um eine Achse (10) schwenkbar nach unten montiert ist, die entlang des Randes der Öffnung (8) gegenüber der Rückwand (2) angebracht ist, um das Entleeren des Materials zu ermöglichen.

3. - Mulde (1) gemäß Anspruch 2, **dadurch gekennzeichnet, dass** die Neigung nach unten bis zu einer geneigten Position der Verschlussplatte (9) erfolgt, um das Entleeren von Material entlang einer geneigten Ausgabebene zu ermöglichen.

4. - Mulde (1) gemäß einem der Ansprüche 2 und 3, **dadurch gekennzeichnet, dass** das Kippen durch mindestens einen Zylinder (11) gesteuert wird, der horizontal verschiebbar ist und dessen Körper (11a) an einem von der Mulde (1) unterhalb derselben getragenen Element (12) befestigt ist und dessen Stange (11b) an der Verschlussplatte (9) unterhalb der die Kippachse (10) enthaltenden Ebene befestigt ist.

5. - Mulde (1) nach Anspruch 4, **dadurch gekennzeichnet, dass** sie einen einzigen, mittig angeordneten Zylinder (11) aufweist.

6. - Mulde (1) gemäß einem der Ansprüche 1 bis 5, **dadurch gekennzeichnet, dass** die obere Wand der Verschlussplatte (9) in geschlossener Position in der Verlängerung des Muldenbodens (1) liegt.

7. - Mulde (1) gemäß einem der Ansprüche 1 bis 6, **dadurch gekennzeichnet, dass** sie seitliche Führungsplatten (13) für das austretende Material aufweist, die vom Rahmen (3) getragen werden.

8. - Mulde gemäß Anspruch 7, **dadurch gekennzeichnet, dass** die Führungsplatten (13) einen nach unten und nach hinten geneigten unteren Rand (13c) aufweisen.

9. - Mulde (1) gemäß einem der Ansprüche 1 bis 8, **dadurch gekennzeichnet, dass** die Verschlussplatte (9) in der Nähe ihres hinteren Randes eine dichte Verschlusseinrichtung (9a) aufweist, die mit einer komplementären dichten Verschlusseinrichtung (6a) zusammenwirken kann, die von der Rückwand (2) getragen wird.

## Claims

1. - A half-round skip (1) with a pusher bottom for transporting material, comprising a skip body (1) closed by a rear wall (2) when viewed in the direction of travel of said skip body (1) when mounted on a semitrailer, a rear wall (2) support frame (3) being disposed between the rear region of the skip (1) and the rear wall (2),
in which a material discharge opening (8) is provided in the bottom of said frame (3) in a position allowing the discharge of material arriving at the bottom of the skip body (1), a closure plate (9) for said opening (8) being mounted in said frame (3) to move from a position of actually closing the discharge opening (8) to an open position for the discharge of material, and **characterised in that** the closure plate (9) extends rearwards to pass under the rear wall (2) of the skip (1), which, when it descends below the upper wall of the closure plate (9) in the closed position, has a notch (6) for the passage of this extension.

2. - The skip (1) according to claim 1, **characterised in that** the closure plate (9) is mounted to tilt downwards, under the frame (3), around an axis (10) mounted along the edge of the opening (8) opposite the rear wall (2) to allow material to be tipped out.

3. - The skip (1) according to claim 2, **characterised in that** the downward tilting is carried out to an inclined position of the closure plate (9), to allow material to be discharged along an inclined outlet plane.

4. - The skip (1) according to one of claims 2 and 3, **characterised in that** the tilting is controlled by at least one cylinder (11) which is horizontally movable and whose body (11a) is fixed to a member (12) carried by the skip (1) below the latter and the rod (11b) is fixed to the closure plate (9) below the plane containing the tilting axis (10).

5. - The skip (1) according to claim 4, **characterised in that** it comprises a single centrally located cylinder (11).

6. - The skip (1) according to one of claims 1 to 5, **characterised in that** the upper wall of the closure plate (9) in the closed position is located in line with the bottom of the bucket (1).

7. - The skip (1) according to one of claims 1 to 6, **characterised in that** it comprises lateral guide plates (13) for the outgoing material, which are supported by the frame (3).

8. - The skip (1) according to claim 7, **characterised in that** the guide plates (13) have a lower edge (13c) that slopes downwards and backwards.

9. - The skip (1) according to one of claims 1 to 8, **characterised in that** the closure plate (9) has, in the vicinity of its rear edge, a sealing closure means (9a) capable of cooperating with a complementary sealing closure means (6a) carried by the rear wall (2).
